# EUROPÄISCHE PATENTANMELDUNG

(11) **EP 2 560 085 A1**
(43) Veröffentlichungstag der Anmeldung: **20.02.2013**
(21) Anmeldenummer: 11178102.7
(22) Anmeldetag: 19.08.2011
(51) Int. Cl.: G06F 3/048, G05B 19/418, G05B 19/042

(54) **Verfahren zur Konfiguration einer Anzeigevorrichtung zur Anzeige von dynamischen Alarmmeldungen eines Steuer- und Überwachungssystems einer technischen Automatisierungsanlage**

(71) Anmelder: SIEMENS AKTIENGESELLSCHAFT, 80333 München (DE)
(72) Erfinder: Fister, Markus, 91054 Erlangen (DE); Hey, Uwe, 90475 Nürnberg (DE); Kunze, Lorenz, 90439 Nürnberg (DE)

(57) **Zusammenfassung**

Die Erfindung betrifft ein Verfahren zur Konfiguration einer Anzeigevorrichtung (130) zur Anzeige von dynamischen Alarmmeldungen eines Steuer- und Überwachungssystems (100) einer technischen Automatisierungsanlage (142), wobei die Konfiguration der Anzeigevorrichtung (130) zur Anzeige von dynamischen Alarmmeldungen mit einer Anwendungssoftware (101) eines Konfigurationssystems (102) des Steuer- und Überwachungssystems (100) erfolgt, wobei die Anzeigevorrichtung (130) zur Anzeige eines Alarmtextes (132) ausgebildet ist, wobei die Anwendungssoftware (101) des Konfigurationssystems (102) zumindest ein editierbares Steuerelement (106) innerhalb des Alarmtextes (132) aufweist, welches in den Alarmtext (132) eingebettet werden kann, wobei das Steuerelement (106) zur Konfiguration der Anzeige des Alarmtextes (132) ausgebildet ist und in einer Maschinensprache der Anwendungssoftware (101) gegeben ist, wobei das Verfahren die Schritte umfasst:
- Übersetzen des Steuerelements (106) in eine höhere Sprache als die Maschinensprache,
- Bestimmung eines editierbaren Teils des Steuerelements (106),
- Anzeigen des übersetzten Steuerelements (106) auf einer grafischen Benutzeroberfläche (104) des Konfigurationssystems (102),
- Visuelles Hervorheben des editierbaren Teils auf dem angezeigten übersetzten Steuerelement (106),
- Empfang eines Drag und Drop Befehls, wobei der Befehl eine Transferierung (116) eines vordefinierten Konfigurationselements (108) aus einer Komponente der Anwendungssoftware (101) in den editierbaren Teil des Steuerelements (106) spezifiziert, wobei das übersetzte Steuerelement (106) und das transferierte Konfigurationselement (108) zusammen ein neues Steuerelement (106a) ergeben, wobei das Konfigurationselement (108) in einer höheren Sprache als die Maschinensprache gegeben ist und als grafisches Symbol (152) auf der grafischen Benutzeroberfläche (104) angezeigt wird,
- Übersetzung des neuen Steuerelements (106a) in die Maschinensprache.

## Beschreibung

Die Erfindung betrifft ein Verfahren zur Konfiguration einer Anzeigevorrichtung zur Anzeige von dynamischen Alarmmeldungen eines Steuer- und Überwachungssystems einer technischen Automatisierungsanlage, eine Vorrichtung zur Konfiguration einer Anzeigevorrichtung zur Anzeige von dynamischen Alarmmeldungen eines Steuer- und Überwachungssystems einer technischen Automatisierungsanlage sowie ein Computerprogrammprodukt.

In Konfigurationssystemen zur Konfiguration einer Anzeigevorrichtung eines Steuer- und Überwachungssystems einer technischen Automatisierungsanlage muss man bei der Alarmkonfiguration nach dem bisherigen Stand der Technik manuell kryptische Zeichenketten in Maschinensprache editieren, wobei man auf die ständige Konsultation von Transkriptionstabellen oder - dokumenten angewiesen ist. Der manuelle Konfigurationsprozess stellt sich somit als sehr mühselig und sehr zeitaufwendig dar.

Um zum Beispiel auslösende Ereignisse für einen Alarmtext zu definieren, der auf einer Anzeigevorrichtung zur Anzeige von dynamischen Alarmmeldungen eines Steuer- und Überwachungssystem angezeigt werden soll, müssen für die händische Erstellung jedes einzelnen Steuerelements innerhalb eines Alarmtextes zur Steuerung und Überwachung einer Automatisierungskomponente einer technischen Anlage jeweils unterschiedliche Transkriptionstabellen und verschiedene Dokumente konsultiert werden, um eine mit der Maschinensprache konforme Syntax bei der Editierung eines Steuerelements innerhalb eines Alarmtextes einzuhalten.

Die einzelnen editierbaren Teile eines Steuerelements innerhalb eines Alarmtextes stellen nach dem bisherigen Stand der Technik kryptischen Zeichenketten dar, die Referenzen auf technische Parameter der technischen Automatisierungsanlage oder andere kodierte Daten enthalten können. Die Zeichenketten haben für den Anwender höchst kryptischen Charakter, was folgende Beispiele veranschaulichen:
a) @1W%t#2W@
b) <TAG _{:} 3, FillLevel_1>

In diesen beiden Fällen könnten beispielsweise folgende Informationen kodiert enthalten sein:
- eine Auszeichnung eines Datenbestandes mit zusätzlichen Informationen und zur Kategorisierung der Daten,
- der Datentyp der Daten,
- Formatierungsinformationen,
- Zeichenlänge,
- Indexnummer,
- oder weitere Informationen.

Bei der Konfiguration eines technischen Alarms unter Einbeziehung von Schwellwerten, die nicht über- oder unterschritten werden dürfen, oder auch zur einfachen Referenzierung von technischen Parametern einer Automatisierungskomponente zur Steuerung spezifischer technische Prozesse der technischen Anlage muss der Anwender zur Editierung von spezifischen Steuerelementen innerhalb eines Alarmtextes solche Informationen, wie oben genannt, als kryptische Zeichenketten kodieren, wobei er zur Einhaltung der Syntax der Maschinensprache stets auf Übersetzungstabellen angewiesen ist. Die manuelle Editierung von Steuerelementen innerhalb eines Alarmtextes zur Steuerung und Überwachung einer technischen Automatisierungsanlage mittels Kodierung in kryptische Zeichenketten, die der Syntax der Maschinensprache entsprechen, stellt somit bisher eine sehr mühselige und zeitaufwendige Prozedur für den Anwender dar.

Demgegenüber liegt der Erfindung die Aufgabe zugrunde, ein verbessertes Verfahren zur Konfiguration einer Anzeigevorrichtung zur Anzeige von dynamischen Alarmmeldungen eines Steuer- und Überwachungssystems einer technischen Automatisierungsanlage, ein verbessertes Konfigurationssystem zur Konfiguration einer Anzeigevorrichtung zur Anzeige von dynamischen Alarmmeldungen eines Steuer- und Überwachungssystems einer technischen Automatisierungsanlage sowie ein verbessertes Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Verfahren zur Konfiguration einer Anzeigevorrichtung zur Anzeige von dynamischen Alarmmeldungen eines Steuer- und Überwachungssystems einer technischen Automatisierungsanlage geschaffen, wobei die Konfiguration der Anzeigevorrichtung zur Anzeige von dynamischen Alarmmeldungen mit einer Anwendungssoftware eines Konfigurationssystems des Steuer- und Überwachungssystems erfolgt, wobei die Anzeigevorrichtung zur Anzeige eines Alarmtextes ausgebildet ist, wobei die Anwendungssoftware des Konfigurationssystems zumindest ein editierbares Steuerelement innerhalb des Alarmtextes aufweist, welches in den Alarmtext eingebettet werden kann, wobei das Steuerelement innerhalb des Alarmtextes zur Konfiguration der Anzeige des Alarmtextes ausgebildet ist und in einer Maschinensprache der Anwendungssoftware gegeben ist, wobei das Verfahren die Schritte umfasst:
- Übersetzen des Steuerelements in eine höhere Sprache als die Maschinensprache,
- Bestimmung eines editierbaren Teils des Steuerelements,
- Anzeigen des übersetzten Steuerelements nach einer grafischen Benutzeroberfläche des Konfigurationssystems,
- visuelles Hervorheben des editierbaren Teils auf dem angezeigten übersetzten Steuerelement,
- Empfang eines Drag- and Drop-Befehls, wobei der Befehl eine Transferierung eines vordefinierten Konfigurationselements aus einer Komponente der Anwendungssoftware in den editierbaren Teil des Steuerelements spezifiziert, wobei das übersetzte Steuerelement und das transferierte Konfigurationselement zusammen ein neues Steuerelement ergeben, wobei das Konfigurationselement in einer höheren Sprache als die Maschinensprache gegeben ist und als grafisches Symbol auf der grafischen Benutzeroberfläche angezeigt wird,
- Übersetzung des neuen Steuerelements in die Maschinensprache.

Es wird also ein verbessertes Verfahren zur Konfiguration einer Anzeigevorrichtung zur Anzeige von dynamischen Alarmmeldungen eines Steuer- und Überwachungssystems einer technischen Automatisierungsanlage geliefert, welches dem Anwender durch ein einfaches Drag- und Drop Verfahren, das auch modulübergreifend innerhalb des Konfigurationssystems ausgeführt werden kann, sowie unter verstärkter Nutzung von anwenderfreundlichen optischen Elementen ermöglicht, Steuerelemente innerhalb eines Alarmtextes zur Steuerung und Überwachung der technischen Automatisierungsanlage ohne viel Aufwand zu editieren. D.h. es kann durch Auswählen eines bestimmten als grafisches Symbol dargestellten Konfigurationselements, welches in der grafischen Benutzeroberfläche als grafisches Symbol dargestellt ist, mit einer Computermaus aus einem Menü mit vordefinierten, als grafische Symbole dargestellten, Konfigurationselementen, nachfolgendes Verschieben eines dieser als grafisches Symbol dargestellten Konfigurationselemente und anschließendes Positionieren des als grafisches Symbol dargestellten Konfigurationselements in ein editierbares Steuerelement innerhalb des Alarmtextes ein neues Steuerelement innerhalb des Alarmtextes generiert werden, ohne der konfigurierende Anwender kryptischen Code in Maschinensprache erzeugen muss.

In diesem Kontext werden dynamische Alarmmeldungen dadurch erzeugt, dass bereits hinterlegte statische Textmeldungen geändert und dann zur Laufzeit neu eingelesen werden.

Im Bereich des Incident- und Event-Managements ermöglicht das beanspruchte Verfahren ein einfaches Verschieben von vordefinierten, jeweils als grafisches Symbol dargestellten Konfigurationselementen aus einer Menüleiste, welche technische Parameter, Variablen, Textlisten oder Ähnliches enthalten können, in das editierbare Feld eines Steuerelements per Drag und Drop, um so zum Beispiel ein einen Alarm auslösendes Ereignis zu definieren. Dabei könnte durch eine geschickte Farbwahl, eine selbstaussagende Symbolik der grafischen Symbole und/oder eine Kategorisierung von Datenmengen oder Datentypen durch bestimmte Ikons erneut eine erhöhte Benutzerfreundlichkeit bei der Konfiguration von Steuerelementen innerhalb eines Alarmtextes erzielt werden.

Während des Drag- and Drop-Prozesses erfolgt automatisch eine Referenzierung zu technischen Parametern der technischen Automatisierungsanlage, von Variablen oder Textlisten, die der Anwender in dem vordefinierten als grafisches Symbol dargestellten Konfigurationselement vorher definiert hat. Das verschobene, als grafisches Symbol dargestellte Konfigurationselement wird durch das Positionieren in die Zeile für das editierbare Steuerelement innerhalb des Alarmtextes automatisch in das Steuerelementsyntaktisch integriert, wobei ein neues Steuerelement entsteht, welches gleichzeitig in eine höhere Sprache als die Maschinensprache übersetzt wird. Möglich ist auch das Positionieren von mehreren vordefinierten, als grafische Symbole dargestellten Konfigurationselementen in die editierbare Zeile eines editierbaren Steuerelements innerhalb eines Alarmtextes.

Ein Vorteil des Editierens eines Steuerelements innerhalb eines Alarmtextes per Drag- und Drop Verfahren innerhalb des Konfigurationssystems könnte darin liegen, dass die Übersetzung des neuen Steuerelements in die Maschinensprache von dem Konfigurationssystem selbst übernommen wird, was dem Anwender den aufwendigen Prozess der manuellen Kodierung in kryptische Zeichenketten mittels Konsultation von Übersetzungstabellen und sonstigen Dokumenten erspart. Das Drag- und Drop-Verfahren bei der Editierung von neuen Steuerelementen zur Konfiguration einer Anzeigevorrichtung, insbesondere im Kontext der Erstellung von Alarmtexten, könnte somit eine erhöhte Anwenderfreundlichkeit und eine beträchtliche Beschleunigung bei der Erstellung von neuen Steuerelementen innerhalb eines Alarmtextes implizieren.

Dabei kann durch individuell konfigurierte Steuerelemente innerhalb eines Alarmtextes, die jeweils bestimmte Konfigurationselemente enthalten, welche wiederum spezifische technische Parameter, bestimmte Werte für technische Parameter, technische Variablen und/oder bestimmte Datentypen kategorisieren, ein jeweils auf die jeweiligen Bedürfnisse angepasster Alarmtext zur Anzeige eines technischen Alarms, der durch eine Fehlfunktion der technischen Automatisierungsanlage ausgelöst wurde, konfiguriert werden. Dieser spezifisch konfigurierte Alarmtext wird dann in einer Anzeigevorrichtung, welche als Schnittstelle zwischen Mensch und Maschine fungiert, angezeigt. Die definierten Variablen innerhalb eines Steuerelements eines Alarmtexts erhalten dabei ihren Input bezüglich der zu kontrollierenden technischen Parameter der technischen Automatisierungsanlage über eine Kommunikationsschnittestelle mit den einzelnen Automatisierungskomponenten der technischen Automatisierungsanlage. Somit kann z.B. in einem HMI-Panel nicht nur ein ständiger Abgleich zwischen Soll- und Ist-Daten von technischen Parameters einer technischen Automatisierungsanlage stattfinden und visualisiert werden, sondern es können auch auf Basis des ständigen Soll-Ist-Vergleichs zeitnah anzuzeigende Events mittels der Steuerelemente definiert werden, die dann gemäß erfolgter Definition im Konfigurationsprozess entweder als Alarmtext, optisch oder akustisch bei Eintritt eines technischen Alarms dargestellt werden.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren und/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das PROFIBUS-Protokoll (z. B. gemäß IEC 61158), ein PROFIBUS-DP-Protokoll, ein PROFIBUS-PA-Protokoll, ein PROFINET-Protokoll, ein PROFINET-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernet-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Nach einer Ausführungsform der Erfindung wird das Konfigurationselement zumindest nach Anzeigen des übersetzten Steuerelements kontinuierlich dynamisch aktualisiert, wobei das während des Drag- und Drop Vorgangs gültige Konfigurationselement in den editierbaren Teil des Steuerelements transferiert wird.

Dies könnte den Vorteil haben, dass bei einer Änderung des als grafisches Symbol dargestellten Konfigurationselements gleichzeitig das Steuerelement innerhalb eines Alarmtextes aktualisiert wird. Dabei kann die Aktualisierung des als grafisches Symbol dargestellten Konfigurationselements entweder diskontinuierlich, zum Beispiel über eine technisch vorgenommene Veränderung, oder kontinuierlich mittels eines automatisierten Prozesses vorgenommen werden. Dies hat den Vorteil, dass im Rahmen des Incident-Managements Alarmtexte stets aktuell sind, da die zu beobachtenden und zu steuernden technischen Parameter der technischen Automatisierungsanlage sowie deren Beziehung zueinander stets aktuell gehalten werden.

Nach einer Ausführungsform der Erfindung erfolgt die kontinuierliche dynamische Aktualisierung in Echtzeit. Dies könnte den Vorteil haben, dass die Editierung der Steuerelemente innerhalb eines Alarmtextes und deren Übersetzung in die Maschinensprache stets auf Echtzeitdaten der technischen Automatisierungsanlage basiert. Ein technischer Alarm kann somit zeitnah bei Überschreiten kritischer Schwellwerte auf einer Anzeigevorrichtung mittels eines spezifischen Alarmtextes angezeigt werden.

Nach einer Ausführungsform der Erfindung weist das als grafisches Symbol dargestellte Konfigurationselement technische Parameter der technischen Automatisierungsanlage auf. Dies könnte den Vorteil haben, dass auf einfache Art und Weise mittels Drag und Drop Verfahren bestimmte Datenmengen von technischen Parametern in den editierbaren Steuerelementen innerhalb eines Alarmtextes in einer komfortablen Weise in Beziehung gebracht werden können: entweder zu anderen Datenmengen der technischen Parameter der technischen Automatisierungsanlage oder zu vordefinierten kritischen Schwellwerten, deren Über- oder Unterschreiten für die Auslösung eines technischen Alarms relevant ist.

Nach einer Ausführungsform der Erfindung ermöglicht das grafische Symbol durch eine Tooltip Funktionalität, eine Vorschau auf die technischen Parameter der technischen Automatisierungsanlage, welche das als grafisches Symbol dargestellte Konfigurationselement aufweist.

Ein Tooltip (sinngemäß übersetzt: Werkzeughilfe) ist ein kleines Pop-up-Fenster in einem Anwendungsprogramm, das dem Benutzer einen Beschreibungstext zu einem Element der grafischen Benutzungsoberfläche anzeigt. Der Tooltip erscheint, wenn der Benutzer den Mauszeiger eine gewisse Zeit ruhig über dem entsprechenden Objekt schweben lässt, und verschwindet automatisch, sobald der Benutzer die Schaltfläche bzw. den Link anklickt oder die Maus wegbewegt. Tooltips können ergänzende Informationen zu dem zugehörigen Element enthalten, die ansonsten nicht sichtbar sind; sie können aber auch den Text zeigen, den das Objekt selbst auch enthält.

Die Tooltip Funktionalität des grafischen Symbols könnte den Vorteil haben, dass dem konfigurierenden Anwender die Inhalte der als grafischen Symbole angezeigten Konfigurationselemente durch einfaches Positionieren des Mauszeigers auf ein grafisches Symbol der Inhalt eines in grafischer Weise dargestellten Konfigurationselements angezeigt werden kann, wodurch der konfigurierende Anwender eine Kontrollmöglichkeit hat, welche technischen Parameter und/oder welche Steuerbefehle und/oder welche logischen Terme er gerade beim Editieren eines Steuerelements innerhalb eines Alarmtextes er verwendet. Außerdem wird für diese Art der Informationsvermittlung über den Inhalt eines Konfigurationselements kein weiterer Platz in der Konfigurationsoberfläche selbst in Anspruch genommen.

Nach einer Ausführungsform der Erfindung zeigt das grafische Symbol Informationen über einen Datentyp der technischen Parameter der technischen Automatisierungsanlage, welche das als grafisches Symbol dargestellte Konfigurationselement aufweist.

Die vom grafischen Symbol gelieferte Information hinsichtlich des Datentyps der technischen Parameter der technischen Automatisierungsanlage gibt dem konfigurierenden Anwender eindeutig einen Hinweis, welche mathematischen Operatoren und welche anderen Datenmengen oder technischen Schwellwerten mit den jeweils im Konfigurationselement enthaltenen technischen Parametern miteinander logisch verknüpft und/oder aggregiert werden dürfen. Die Konfiguration des Steuerelements innerhalb eines Alarmtextes kann damit zielgerichteter und zügiger vonstatten gehen.

Nach einer Ausführungsform der Erfindung wird das neue Steuerelement innerhalb des Alarmtextes überprüft, wobei das Überprüfen umfasst:
- Bestimmung, ob das neue Steuerelement zulässig ist, wobei im Fall einer Unzulässigkeit das neue Steuerelement verworfen wird, und/oder
- Bestimmung, ob das neue Steuerelement einer vordefinierten Regel entspricht, wobei im Fall der Entsprechung der Regel ein der Regel zugeordneter Warnparameter angezeigt wird, wobei das neue Steuerelement zusammen mit dem Warnparameter in die Maschinensprache übersetzt wird.

Dies könnte den Vorteil haben, dass ein mittels Transferierung eines als grafisches Symbol dargestellten Konfigurationselements erzeugtes neues Steuerelement bei der Übersetzung des neuen Steuerelements in die Maschinensprache einen systemimmanenten Konsistenzcheck bezüglich Logik, Syntax und/oder Regelverletzung durchläuft. Bei negativem Ausgang des Konsistenzchecks wird das neue Steuerelement verworfen. Bei einer Regelverletzung wird ein Warnparameter angezeigt, der dem Anwender signalisiert, dass eine Regelverletzung vorliegt.

Diese Überprüfungsmechanismen könnten den Vorteil haben, dass ein willkürliches Drag und Drop von als grafisches Symbol dargestellten Konfigurationselementen in die editierbaren Steuerelemente verhindert werden könnte. Außerdem könnten durch die systemimmanente Kontrolle vordefinierte Regeln nicht verletzt werden. Die Fehlerquote bei der Konfiguration von Steuerelementen könnte somit erheblich reduziert werden. Dies gilt insbesondere im Vergleich zum Stand der Technik, wo im Falle einer manuellen Editierung von Steuerelementen innerhalb eines Alarmtextes keinerlei Kontrollmöglichkeiten gegeben sind. Dort ist der konfigurierende Anwender selbst eher auf sein eigenes technisches und programmiertechnisches Verständnis und/oder eigene Berechnungen zur Kontrolle angewiesen.

Bevor eine Konfiguration im System der technischen Automatisierungsanlage endgültig umgesetzt wird, wird schon auf Editierebene ein Konfigurationsfehler für den Anwender sichtbar dargestellt. Dadurch könnte letztendlich verhindert werden, dass fehlerhafte Konfigurationen im System der technischen Automatisierungsanlage technisch real durchgeführt würden. Die auf Editierebene installierte Frühwarnfunktion verhindert eine fehlerhafte technische Umsetzung einer Konfiguration der Anzeigevorrichtung zur Anzeige eines Alarmtextes, wodurch die Anzahl der ausgelösten Fehlalarme reduziert wird.

Nach einer Ausführungsform der Erfindung umfasst das Konfigurationselement technische Parameter der technischen Automatisierungsanlage und/oder Steuerbefehle und/oder logische Terme.

Dies könnte den Vorteil haben, dass mit Hilfe von per Drag und Drop in die Editierzeile eines Steuerelements transferierten, als grafisches Symbol dargestellten Konfigurationselementen in kompakter und anwenderfreundlicher Form ganze Teile eines Maschinencodes dargestellt werden könnten. Die Kombination von verschiedenen Typen von Konfigurationselementen innerhalb eines Steuerelements, zum Beispiel die Kombination von als grafisches Symbol dargestellten Konfigurationselementen, die technische Parameter repräsentieren, mit Konfigurationselementen, die logische Terme repräsentieren, erlaubt die Definition eines kritischen Events der technischen Automatisierungsanlage, was bei manueller Kodierung in Maschinensprache mittels kryptischer Zeichenketten mehrere Programmierzeilen in Anspruch nehmen würde. Durch eine mögliche Kombinierbarkeit von einer Vielzahl von als grafisches Symbol dargestellten Konfigurationselementen unterschiedlichen Typs in einem editierbaren Steuerelement könnten somit durch ein anwenderfreundliches Drag- und Drop Verfahren ganze Fragmente eines Maschinensprachcodes in unkomplizierter und beschleunigter Weise hergestellt werden. Die Konfiguration von in Beziehung stehenden Steuerelementen für Alarmtexte, die in der Anzeigevorrichtung angezeigt würden, würde dadurch erheblich erleichtert und beschleunigt.

Nach einer Ausführungsform der Erfindung umfasst das beanspruchte Verfahren den Schritt des Empfangens von weiteren Steuerdaten über eine Tastatur, wobei das neue Steuerelement innerhalb des Alarmtextes die Steuerdaten umfasst.

Mit anderen Worten kann ein in ein Steuerelement innerhalb des Alarmtextes eingefügtes als grafisches Symbol dargestelltes Konfigurationselement vom Anwender mittels Eingabe über die Tastatur noch weiter manuell editiert werden. So kann der Anwender zum Beispiel noch Indexzahlen oder andere Referenzzeichen zur weiteren Spezifizierung der technischen Parameter oder Steuerbefehle nachträglich nach Platzierung in das Steuerelement eingeben. Außerdem kann das als grafisches Symbol dargestellte Konfigurationselement nach eventuell vorher durchgeführten technischen Änderungen manuell über die Tastatur aktualisiert werden. Die Anpassungsfähigkeit des Konfigurationssystems nach vorherigen Änderungen wird dadurch weiter erhöht. Außerdem können Referenzierungen zwischen technischen Parametern der technischen Automatisierungsanlage noch weiter spezifiziert werden. Die Multimodalität sowie Flexibilität der Konfiguration von Steuerelementen innerhalb eines Alarmtextes wird dadurch erhöht.

Nach einer Ausführungsform der Erfindung wird vor Übersetzung des neuen Steuerelements innerhalb des Alarmtextes in die Maschinensprache das transferierte als grafisches Symbol dargestellte Konfigurationselement aufgrund einer Benutzeranforderung in die Maschinensprache übersetzt. Dies kann den Vorteil haben, dass schon auf Ebene des einzelnen als grafisches Symbol dargestellten Konfigurationselements eine systemimmanente Überprüfung hinsichtlich Logik- und Syntaxkonsistenz vorgenommen werden kann. Erst wenn dieser Test erfolgreich verläuft, findet die Integration des einzelnen als grafisches Symbol dargestellten Konfigurationselements in das Steuerelement statt und erst danach findet eine Übersetzung des ganzen Steuerelements in die Maschinensprache statt. Somit findet eine zweifache Kontrolle, einmal auf Ebene des transferierten Konfigurationselements und einmal auf Ebene des vollständigen neuen Steuerelements, hinsichtlich Logik- und Syntaxkonsistenz des neu editierten Steuerelements statt.

Nach einer Ausführungsform der Erfindung wird das übersetzte transferierte Konfigurationselement in das Steuerelement eingebettet angezeigt.

Dies kann den Vorteil haben, dass durch die Anzeige des als grafisches Symbol dargestellten transferierten Konfigurationselements in das Steuerelement als eingebettet, der Anwender die Gewissheit hat, dass Logik- und Syntaxkonsistenz sowie keine Regelverletzung vorliegt, und somit für ihn kein weiterer Handlungsbedarf besteht. Die Kommunikation zwischen Mensch und Maschine wird durch ein einfaches optisches Zeichen erleichtert.

Nach einer Ausführungsform der Erfindung ist die Anzeigevorrichtung zur Anzeige von dynamischen Alarmmeldungen als HMI-Panel ausgebildet.

Grundsätzlich kann das Verfahren zur Konfiguration einer Anzeigevorrichtung zur Anzeige von dynamischen Alarmmeldungen eines Steuer- und Überwachungssystems einer technischen Automatisierungsanlage auf allen Typen von maschinennahen Bedien- und Beobachtungsgeräten sowie allen Typen von Schnittstellen zur Visualisierung von technischen Parametern und Prozessabläufen einer technischen Automatisierungsanlage angewendet werden. Insbesondere kann das beanspruchte Verfahren bei Human Machine Interface (HMI) -Vorrichtungen angewendet werden. Diese PC-basierte Visualisierungslösung bietet sowohl offene als auch standardisierte Schnittstellen auf Hard- und Softwareebene, hohe Kompatibilität zur Integration in automatisierte Systeme und bietet als Schnittstelle zwischen Mensch und Maschine ein Höchstmaß an Benutzerfreundlichkeit und Transparenz beim maschinennahen Bedienen und Beobachten einer technischen Automatisierungsanlage.

In einem weiteren Aspekt betrifft die Erfindung ein Konfigurationssystem zur Konfiguration einer Anzeigevorrichtung zur Anzeige von dynamischen Alarmmeldungen eines Steuer- und Überwachungssystems einer technischen Automatisierungsanlage, wobei die Konfiguration der Anzeigevorrichtung zur Anzeige von dynamischen Alarmmeldungen mit einer Anwendungssoftware eines Konfigurationssystems des Steuer- und Überwachungssystems erfolgt, wobei die Anzeigevorrichtung zur Anzeige eines Alarmtextes ausgebildet ist, wobei die Anwendungssoftware des Konfigurationssystems zumindest ein editierbares Steuerelement aufweist, welches in den Alarmtext eingebettet werden kann, wobei das Steuerelement zur Konfiguration der Anzeige des Alarmtextes ausgebildet ist und in einer Maschinensprache der Anwendungssoftware gegeben ist, wobei das Konfigurationssystem zur Durchführung folgender Schritte ausgebildet ist:
- Übersetzen des Steuerelements in eine höhere Sprache als die Maschinensprache,
- Bestimmung eines editierbaren Teil des Steuerelements,
- Anzeigen des übersetzten Steuerelements auf einer grafischen Benutzeroberfläche der Anwendungssoftware des Konfigurationssystems,
- visuelles Hervorheben des editierbaren Teils auf dem angezeigten übersetzten Steuerelement,
- Empfang eines Drag- und Dropbefehls, wobei der Befehl eine Transferierung eines vordefinierten Konfigurationselements aus einer Komponente der Anwendungssoftware in den editierbaren Teil des Steuerelements spezifiziert, wobei das übersetzte Steuerelement und das transferierte Konfigurationselement zusammen ein neues Steuerelement ergeben, wobei das Konfigurationselement in einer höheren Sprache als die Maschinensprache gegeben ist und als grafisches Symbol auf der grafischen Benutzeroberfläche angezeigt wird,
- Übersetzung des neuen Steuerelements in die Maschinensprache.

In einem weiteren Aspekt betrifft die Erfindung ein Computerprogrammprodukt mit von einem Prozessor ausführbaren Instruktionen zur Durchführung der Verfahrensschritte gemäß einem der vorigen Ansprüche.

Im Folgenden werden bevorzugte Ausführungsformen der Erfindung anhand der folgenden Zeichnungen näher erläutert.
- Figur 1: ein Blockdiagramm eines Konfigurationssystems zur Konfiguration einer Anzeigevorrichtung zur Anzeige von dynamischen Alarmmeldungen im Rahmen eines Steuer- und Überwachungssystems einer technischen Automatisierungsanlage,
- Figur 2: ein Ausschnitt der grafischen Benutzeroberfläche des Konfigurationssystems mit Darstellung von als grafisches Symbol dargestellten Konfigurationselementen und einem editierbaren Steuerelement innerhalb eines Alarmtextes.

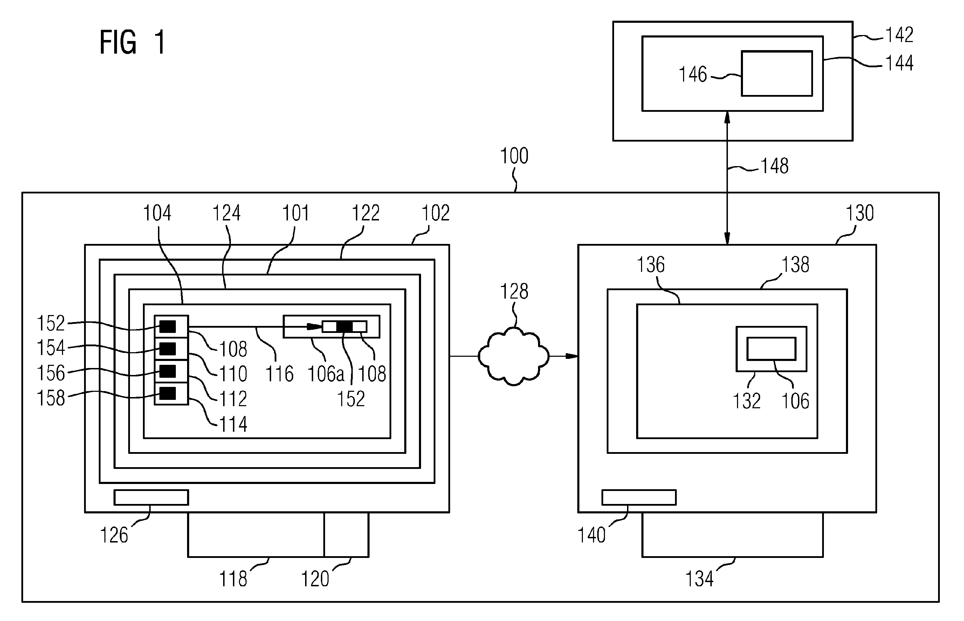

Die Figur 1 zeigt ein Blockdiagramm eines Steuer- und Überwachungssystems 100, bestehend aus einem Konfigurationssystem 102 und einer Anzeigevorrichtung 130 zur Anzeige von dynamischen Alarmmeldungen, mittels dessen eine Automatisierungskomponente 144 einer technische Automatisierungsanlage 142 gesteuert und überwacht wird. Das Konfigurationssystem 102 umfasst eine Anwendungssoftware 101, welche eine grafische Benutzeroberfläche 104 mit mindestens einem Steuerelement 106 innerhalb eines Alarmtextes 132 und mehreren Konfigurationselementen 108, 110, 112, 114, welche jeweils als grafische Symbole dargestellt werden, umfasst. Des Weiteren umfasst das Konfigurationssystem 102 einen Speicher 122, einen Prozessor 126, einen Monitor 124, eine Tastatur 118, und eine Computermaus 120.

Das Konfigurationssystem 102 ist mittels eines Netzwerks 128 mit einer Anzeigevorrichtung 130 zur Anzeige von dynamischen Alarmmeldungen verbunden. Die Anzeigevorrichtung 130 zur Anzeige von dynamischen Alarmmeldungen umfasst einen Monitor 136, in dem ein Alarmtext 132 angezeigt werden kann, sowie eine Eingabetastatur 134, einen Speicher 138 und einen Prozessor 140.

Das Steuer- und Überwachungssystem 100 steuert bzw. überwacht eine Automatisierungskomponente 144 einer technischen Automatisierungsanlage 142. Der Kommunikationsweg 148 zwischen Anzeigevorrichtung 130 zur Anzeige von dynamischen Alarmmeldungen und Automatisierungskomponente 144 der technischen Automatisierungsanlage 142 kann entweder drahtlos oder mittels konventionellen Netzwerkkabeln hergestellt werden. Die Automatisierungskomponente 144 der technischen Automatisierungsanlage 142 weist die technischen Parameter 146 auf, die die Basis zur Steuerung und Überwachung durch das Steuer- und Überwachungssystem 100 darstellen.

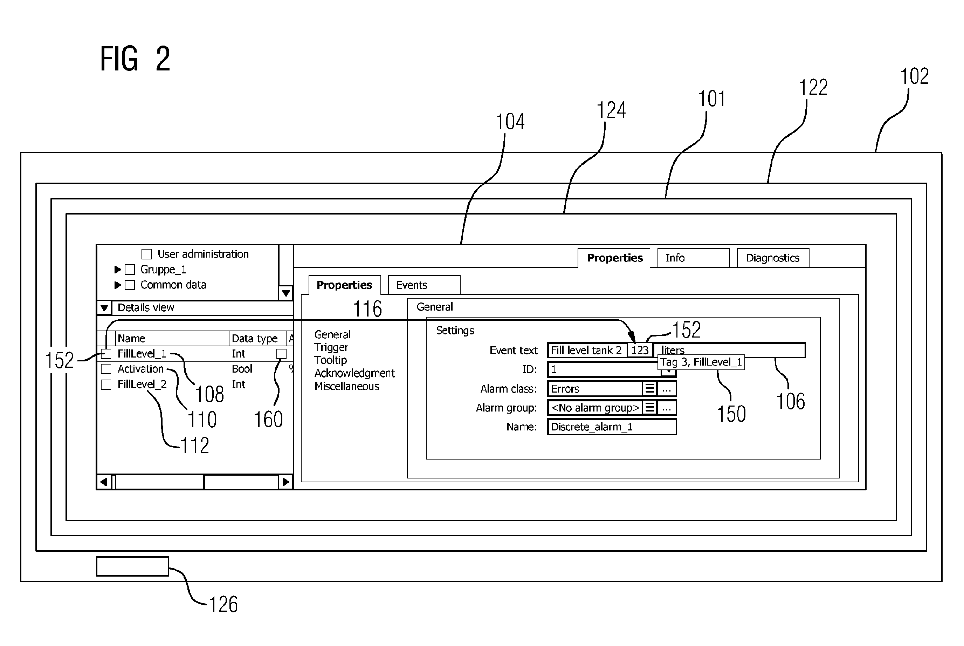

Die Figur 2 zeigt einen Ausschnitt der grafischen Benutzeroberfläche 104 aus der Anwendungssoftware 101 des Konfigurationssystems 102. Dargestellt ist das Menü zur Konfiguration von Alarmtexten 132. In der linken Menüleiste befinden sich Konfigurationselemente 108, 110, 112, 114 welche durch einen Drag- und Drop Prozess 116 in das editierbare Steuerelement 106 innerhalb eines Alarmtextes 132 positioniert werden können, wodurch das neue Steuerelement 106a innerhalb des Alarmtextes erzeugt wird.

Dabei sind die Konfigurationselemente 108, 110, 112, 114 jeweils als grafisches Symbol 152, 154, 156, 158 im linken Menüteil der grafischen Benutzeroberfläche 104 der Anwendungssoftware 101 des Konfigurationssystems 102 dargestellt. Unter der Spalte Datentyp wird z.B. für den Datentyp INTEGER ein spezifisches Ikon 160 angezeigt.

Auch im neuen Steuerelement 106a innerhalb des Alarmtextes 132 werden die integrierten Konfigurationselemente 108, 110, 112, 114 jeweils als grafisches Symbol 152, 154, 156, 158 dargstellt. Dabei zeigt z.B. ein Stift-Symbol die weitere Editierbarkeit des Konfigurationselements 108 an. Ein kleines Pop-Up Fenster am Konfigurationselement zeigt die Tooltip-Funktionalität 150 mit Vorschaumöglichkeit auf die technischen Parameter 146 an. In einer weiteren Ausführungsform kann ein grafisches Symbol auch einen bestimmten Wert eines technischen Parameters 146 repräsentieren.

In einer Ausführungsform der Erfindung wird zur Konfiguration beispielsweise eines Alarmtextes 132, der in der Anzeigevorrichtung 130 zur Anzeige von dynamischen Alarmmeldungen eines Steuer- und Überwachungssystems 100 einer technischen Automatisierungsanlage 142 angezeigt werden soll, wenn ein technischer Alarm bei der technischen Automatisierungsanlage 142 durch ein bestimmtes kritisches Ereignis ausgelöst wird, in der Anwendungssoftware 101 des Konfigurationssystems 102 durch das Anklicken eines vordefinierten Konfigurationselements 108, welches als grafisches Symbol 152 in der linken Menüleiste der grafischen Benutzeroberfläche 104 dargestellt ist, mit der linken Taste einer Computermaus 120 selektiert, durch Verschieben und anschließendes Absetzen mittels gedrückter linker Maustaste auf dem editierbaren Teil des Feldes eines zu editierenden Steuerelements 106 innerhalb eines Alarmtextes 132 zunächst positioniert. Dabei liefert die Anwendungssoftware 101 des Konfigurationssystems 102 dem Konfigurierenden durch visuelles Hervorheben des editierbaren Teils des Steuerelements 106 eine eindeutige Hilfestellung. Der konfigurierende Anwender weiß durch die z.B. unterschiedlich gefärbten Teile des Editierfeldes des Steuerelements 106, welche Art (z.B. Werte für einzelne technische Parameter, eine bestimmte Datenmenge von technischen Parametern, Datentypen, Formatierungsinformationen) von Konfigurationselement 108 in welchen Teil des zu editierenden Steuerelements 106 zu integrieren ist.

Nach diesem Drag und Drop Prozess 116 wird das in das Steuerelement 106 transferierte Konfigurationselement 108, welches als grafisches Symbol 152 dargestellt ist, von der Anwendungssoftware 101 des Konfigurationselements 108 selbständig in eine höhere Sprache als die Maschinensprache übersetzt. Schon nach diesen beiden Schritten wird deutlich, dass sich der konfigurierende Anwender den mühseligen und zeitaufwendigen Prozess der Kodierung eines Steuerelements 106 innerhalb eines Alarmtextes 132 in einen kryptischen Maschinencode unter Konsultation von umfangreichen Transkriptionstabellen ersparen könnte.

Nach einem erfolgreichen systemimmanenten Check bezüglich Syntax- und Logikkonsistenz des eingefügten als grafisches Symbol 152 dargestellten Konfigurationselements 108 und nach erfolgreicher Übersetzung des als grafisches Symbol 152 dargestellten Konfigurationselements 108 in Maschinensprache, wird die erfolgreiche Integration des per Drag und Drop Verfahren eingefügten, als grafisches Symbol 152 dargestellten, Konfigurationselements 108 in das zu editierende Steuerelement 106 innerhalb eines Alarmtextes 132 anwenderfreundlich optisch dadurch angezeigt, dass z.B. ein Farbwechsel des eingefügten, als grafisches Symbol 152 dargestellten, Konfigurationselements 108 von einer Farbe zu einer anderen Farbe stattfinden könnte. Dadurch wird dem konfigurierenden Anwender signalisiert, dass er den richtigen Typ von Konfigurationselement (z.B. Werte für einzelne technische Parameter, eine bestimmte Datenmenge von technischen Parametern, Datentypen, Formatierungsinformationen) in das Steuerelement 106 integriert hat, dass keine Regelverletzung vorliegt, dass die Übersetzung des Konfigurationselements 108 in die Maschinensprache erfolgreich durchgeführt werden konnte und dass keine weiteren Konfigurationsfehler beim bisherigen Editieren des Steuerelement 106 innerhalb des Alarmtextes 132 vorliegen.

Nach einer Ausführungsform der Erfindung können in ein editierbares Steuerelement 106 innerhalb eines Alarmtextes 132 durchaus auch mehrere Konfigurationselemente 108, 110, 112, 114 unterschiedlichen Typs (z.B. Werte für einzelne technische Parameter, eine bestimmte Datenmenge von technischen Parametern, Datentypen, Formatierungsinformationen), welche jeweils als grafische Symbole 152, 154, 156, 158 dargestellt werden, durch Drag und Drop Prozess 116 in die Editierzeile eines zu editierenden Steuerelements 106 platziert werden, so dass der Spezifizierungsgrad eines Steuerelements innerhalb eines Alarmtextes 132je nach Bedarf unterschiedlich hoch angesetzt werden kann.

Erst nach erfolgreicher Übersetzung jedes einzelnen Konfigurationselements 108, 110, 112, 114, jeweils dargestellt als grafisches Symbol 152, 154, 156, 158, innerhalb des neu zu editierenden Steuerelements 106 innerhalb eines Alarmtextes 132erfolgt die Übersetzung des ganzen Steuerelements 106in die Maschinensprache, wodurch das neu erzeugte Steuerelement 106a letztlich erst ausführbar ist.

## Patentansprüche

1. Computer-implementiertes Verfahren zur Konfiguration einer Anzeigevorrichtung (130) zur Anzeige von dynamischen Alarmmeldungen eines Steuer- und Überwachungssystems (100) einer technischen Automatisierungsanlage (142), wobei die Konfiguration der Anzeigevorrichtung (130) zur Anzeige von dynamischen Alarmmeldungen mit einer Anwendungssoftware (101) eines Konfigurationssystems (102) des Steuer- und Überwachungssystems (100) erfolgt, wobei die Anzeigevorrichtung (130) zur Anzeige eines Alarmtextes (132) ausgebildet ist, wobei die Anwendungssoftware (101) des Konfigurationssystems (102) zumindest ein editierbares Steuerelement 106 innerhalb des Alarmtextes (132) aufweist, welches in den Alarmtext (132) eingebettet werden kann, wobei das Steuerelement (106) zur Konfiguration der Anzeige des Alarmtextes (132) ausgebildet ist und in einer Maschinensprache der Anwendungssoftware (101) gegeben ist, wobei das Verfahren die Schritte umfasst:
- Übersetzen des Steuerelements (106) in eine höhere Sprache als die Maschinensprache,
- Bestimmung eines editierbaren Teils des Steuerelements (106),
- Anzeigen des übersetzten Steuerelements (106) auf einer grafischen Benutzeroberfläche (104) des Konfigurationssystems (102),
- Visuelles Hervorheben des editierbaren Teils auf dem angezeigten übersetzten Steuerelement (106),
- Empfang eines Drag und Drop Befehls, wobei der Befehl eine Transferierung (116) eines vordefinierten Konfigurationselements (108) aus einer Komponente der Anwendungssoftware (101) in den editierbaren Teil des Steuerelements (106) spezifiziert, wobei das übersetzte Steuerelement (106) und das transferierte Konfigurationselement (108) zusammen ein neues Steuerelement (106a) ergeben, wobei das Konfigurationselement (108) in einer höheren Sprache als die Maschinensprache gegeben ist und als grafisches Symbol (152) auf der grafischen Benutzeroberfläche (104) angezeigt wird,
- Übersetzung des neuen Steuerelements (106) in die Maschinensprache.

2. Verfahren nach Anspruch 1, wobei das Konfigurationselement (108) zumindest nach Anzeigen des übersetzten Steuerelements (106) kontinuierlich dynamisch aktualisiert wird, wobei das während des Drag und Drop Vorgangs (116) gültige Konfigurationselement (108) in den editierbaren Teil des Steuerelements (106) transferiert wird.

3. Verfahren nach Anspruch 2, wobei die kontinuierliche dynamische Aktualisierung in Echtzeit erfolgt.

4. Verfahren nach Anspruch 3, wobei das Konfigurationselement (108) technische Parameter (146) der technischen Automatisierungsanlage (142) aufweist.

5. Verfahren nach Anspruch 4, wobei das grafische Symbol durch eine Tooltip Funktionalität (150) eine Vorschau auf die technischen Parameter (146) der technischen Automatisierungsanlage (142) ermöglicht, welche das Konfigurationselement (108) aufweist.

6. Verfahren nach Anspruch 4, wobei das grafische Symbol Informationen über einen Datentyp der technischen Parameter (146) der technischen Automatisierungsanlage (146) zeigt, welche das Konfigurationselement (108) aufweist.

7. Verfahren nach Anspruch 1, ferner mit dem Schritt einer Überprüfung des neuen Steuerelements 106a innerhalb des Alarmtextes (132), wobei das Überprüfen umfasst:
- Bestimmung, ob das neue Steuerelement (106a) zulässig ist, wobei im Fall einer Unzulässigkeit das neue Steuerelement (106a) verworfen wird, und/oder
- Bestimmung, ob das neue Steuerelement (106a) einer vordefinierten Regel entspricht, wobei im Fall der Entsprechung der Regel ein der Regel zugeordneter Warnparameter angezeigt wird, wobei das neue Steuerelement (106) zusammen mit dem Warnparameter in die Maschinensprache übersetzt wird.

8. Verfahren nach Anspruch 1, wobei das Konfigurationselement (108) technische Parameter (146) der technischen Automatisierungsanlage (142) und/oder Steuerbefehle und/oder logische Terme umfasst.

9. Verfahren nach Anspruch 1, ferner mit dem Schritt des Empfangens von weiteren Steuerdaten über eine Tastatur (118), wobei das neue Steuerelement (106a) innerhalb des Alarmtextes (132) die Steuerdaten umfasst.

10. Verfahren nach Anspruch 1, wobei vor Übersetzung des neuen Steuerelements (106a) innerhalb des Alarmtextes (132) in die Maschinensprache das transferierte Konfigurationselement (108) aufgrund einer Benutzeranforderung in die Maschinensprache übersetzt wird

11. Verfahren nach Anspruch 1, wobei das transferierte Konfigurationselement (108) in das Steuerelement (106a) eingebettet angezeigt wird.

12. Verfahren nach Anspruch 1, wobei die Anzeigevorrichtung (130) zur Anzeige von dynamischen Alarmmeldungen als HMI-Panel ausgebildet ist.

13. Computerprogrammprodukt mit von einem Prozessor (126, 140) ausführbaren Instruktionen zur Durchführung der Verfahrensschritte gemäß einem der vorigen Ansprüche.

14. Konfigurationssystem (102) zur Konfiguration einer Anzeigevorrichtung (130) zur Anzeige von dynamischen Alarmmeldungen eines Steuer- und Überwachungssystems (100) einer technischen Automatisierungsanlage (142), wobei die Konfiguration der Anzeigevorrichtung (130) zur Anzeige von dynamischen Alarmmeldungen mit einer Anwendungssoftware (101) eines Konfigurationssystems (102) des Steuer- und Überwachungssystems (100) erfolgt, wobei die Anzeigevorrichtung (130) zur Anzeige eines Alarmtextes (132) ausgebildet ist, wobei die Anwendungssoftware (101) des Konfigurationssystems (102) zumindest ein editierbares Steuerelement 106 innerhalb des Alarmtextes (132) aufweist, welches in den Alarmtext (132) eingebettet werden kann, wobei das Steuerelement (106) zur Konfiguration der Anzeige des Alarmtextes (132) ausgebildet ist und in einer Maschinensprache der Anwendungssoftware (101) gegeben ist, wobei das Konfigurationssystem (102) zur Durchführung folgender Schritte ausgebildet ist:
- Übersetzen des Steuerelements (106) in eine höhere Sprache als die Maschinensprache,
- Bestimmung eines editierbaren Teils des Steuerelements (106),
- Anzeigen des übersetzten Steuerelements (106) auf einer grafischen Benutzeroberfläche (104) des Konfigurationssystems (102),
- Visuelles Hervorheben des editierbaren Teils auf dem angezeigten übersetzten Steuerelement (106),
- Empfang eines Drag und Drop Befehls, wobei der Befehl eine Transferierung (116) eines vordefinierten Konfigurationselements (108) aus einer Komponente der Anwendungssoftware (101) in den editierbaren Teil des Steuerelements (106) spezifiziert, wobei das übersetzte Steuerelement (106) und das transferierte Konfigurationselement (108) zusammen ein neues Steuerelement (106a) ergeben, wobei das Konfigurationselement (108) in einer höheren Sprache als die Maschinensprache gegeben ist und als grafisches Symbol (152) auf der grafischen Benutzeroberfläche (104) angezeigt wird,
- Übersetzung des neuen Steuerelements (106) in die Maschinensprache.
